# EUROPEAN PATENT SPECIFICATION

(11) **EP 2 843 225 B1**
(45) Date of publication and mention of the grant of the patent: **09.05.2018**
(21) Application number: 14181912.8
(22) Date of filing: 22.08.2014
(51) Int. Cl.: F02M 35/10, F02M 26/17, F02M 26/45, F02M 26/47, G01F 1/36, G01F 1/42, G01F 1/44

(54) **Intake manifold having a mixing duct and an EGR flow measurement system integrally formed into the intake manifold**
Ansaugkrümmer mit einem Mischkanal und einem Durchflussmesssystem, die integral mit dem Ansaugkrümmer gebildet sind
Collecteur d'admission comportant un mélangeur et un système de mesure de débit EGR intégralement formés avec le collecteur d'admission

(30) Priority: 27.08.2013 US 201314011280
(43) Date of publication of application: 04.03.2015
(73) Proprietor: Deere & Company, Moline, IL 61265 (US)
(72) Inventor: Forshier, Adam, Cedar Falls, IA Iowa 50613 (US)
(74) Representative: John Deere GmbH & Co. KG

(56) References cited:
- DE-C- 433 549
- US-A1- 2004 168 508
- US-A1- 2007 107 708
- US-A1- 2012 227 399

## Description

The present disclosure relates to an intake manifold. More specifically, the present disclosure relates to an intake manifold having a mixing duct that is integrally formed into an EGR flow measurement system.

All engines-diesel, gasoline, propane, and natural gas-produce exhaust gas containing carbon monoxide (CO), hydrocarbons (HC), and nitrous oxides (NOx). Such emissions are the result of incomplete combustion. In addition, diesel engines also produce particulate matter (PM). As more government focus is being placed on health and environmental issues, agencies around the world are enacting more stringent emission's laws. Because so many diesel engines are used in trucks, the U.S. Environmental Protection Agency and its counterparts in Europe and Japan first focused on setting emissions regulations for the on-road market. While the worldwide regulation of nonroad diesel engines came later, the pace of cleanup and rate of improvement has been more aggressive for nonroad engines than for on-road engines.

Manufacturers of nonroad diesel engines are expected to meet set emissions regulations. For example, Tier 3 emissions regulations required approximately a 65 percent reduction in PM and a 60 percent reduction in NOx from 1996 levels. As a further example, Interim Tier 4 regulations required a 90 percent reduction in PM along with a 50 percent drop in NOx. Still further, Final Tier 4 regulations, which will be fully implemented by 2015, will take PM and NOx emissions to near-zero levels.

US 2012/0227399 A1 discloses an in-flow air injection housing. It includes a supplemental gas inlet, a supply inlet, and a supply outlet. The supply outlet is positioned to deliver supplemental gas received by the supply inlet into an outer groove.

US 2004/0168508 A1 shows an exhaust gas recirculation measurement device. In one embodiment an extension portion is used which extends over a second tap to allow measurement of pressure in the reverse flow direction so that flow rate can be calculated.

In US 2007/0107708 A1 is shown a diesel engine EGR control device and a motor drive type throttle valve device. It contains a first intake air body, a throttle valve and a drive motor, a second air intake body with an EGR valve, a drive motor thereof and a reduction gear mechanism.

An engine may have an EGR system for recirculating a portion of the engine's exhaust gas back to an intake manifold. This portion of the exhaust gas is commonly referred to as recirculated exhaust gas and is useful for reducing the concentration of oxygen available for combustion, thus lowering the combustion temperatures, slowing reactions, and decreasing NOx formations. While, as just mentioned, recirculated exhaust gas means the exhaust gas that is recirculated into the engine, fresh intake gas, conversely, means the gas that is entering the power system from the atmosphere. In some cases, the intake manifold needs to supply a precise ratio of recirculated exhaust gas to fresh intake gas, because too small of a ratio may cause an increase in NOx emissions, while too large of a ratio may cause an increase in soot emissions. To achieve both low NOx emissions and soot emissions simultaneously, it is important that the ratio of the recirculated exhaust gas flow to fresh intake gas flow be optimized, and that also the ratio be consistent amongst all of the engine's cylinders.

Disclosed is an intake manifold, the intake manifold having an intake gas duct, an EGR duct, an EGR flow measurement system, and a mixing duct. The intake gas duct allows the fresh intake gas to flow therethrough. The EGR flow measurement system defines a portion of an EGR duct and measures a differential pressure of the recirculated exhaust gas passing through the EGR flow measurement system. The mixing duct is positioned downstream of the intake gas duct, and it is also positioned downstream of the EGR duct. The mixing duct mixes the fresh intake gas and the recirculated exhaust gas into a mixed intake gas. The mixing duct is integrally formed into the EGR flow measurement system.

The detailed description of the drawings refers to the accompanying figures in which:
FIG 1. is a diagrammatic view of a power system having an intake manifold;
FIG. 2 is a perspective view of the power system and the intake manifold;
FIG. 3 is a sectional view of the intake manifold taken along lines 3-3 of FIG. 2 showing a venturi insert and a EGR flow measurement system;
FIG. 4 is a perspective view of the venturi insert;
FIG. 5 is a perspective view of a second embodiment of an intake manifold;
FIG. 6 is a sectional view of the second embodiment of the exhaust gas recirculation mixer taken along lines 6-6 of FIG. 5 showing an orifice insert; and
FIG. 7 is a perspective view of the orifice insert with portions broken away showing a high pressure section, a low pressure section, and an orifice.

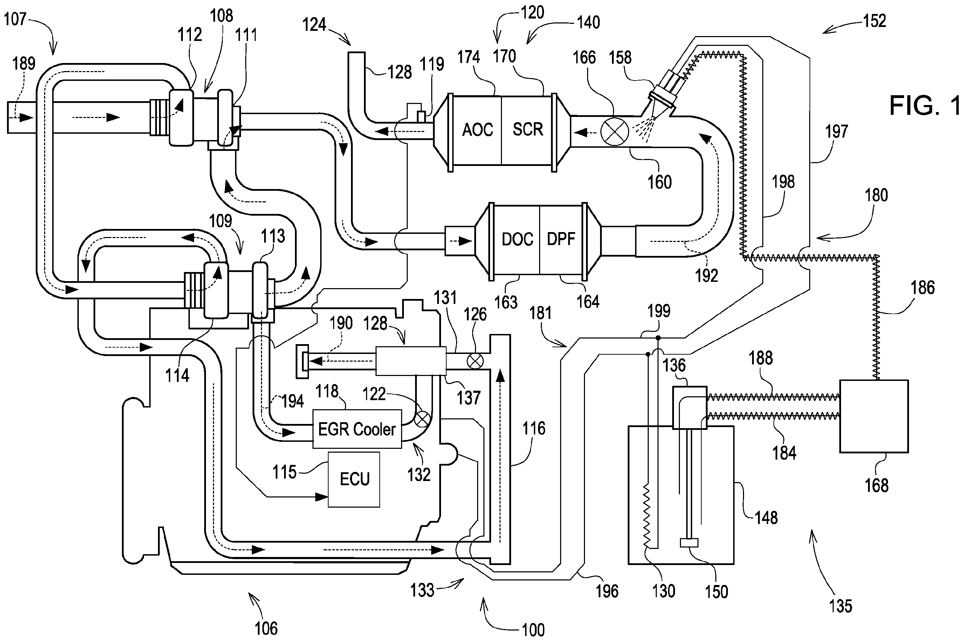

Referring to FIG 1, there is shown a schematic illustration of a power system 100 for providing power to a variety of machines, including on-highway trucks, construction vehicles, marine vessels, stationary generators, automobiles, agricultural vehicles, and recreation vehicles.

The engine 106 may be any kind of engine 106 that produces an exhaust gas, the exhaust gas being indicated by directional arrow 192. For example, engine 106 may be an internal combustion engine, such as a gasoline engine, a diesel engine, a gaseous fuel burning engine (e.g., natural gas) or any other exhaust gas producing engine. The engine 106 may be of any size, with any number cylinders (not shown), and in any configuration (e.g., "V," inline, and radial). Although not shown, the engine 106 may include various sensors, such as temperature sensors, pressure sensors, and mass flow sensors.

The power system 100 may include an intake system 107 for introducing a fresh intake gas, indicated by directional arrow 189, into the engine 106. For example, the intake system 107 may include an intake manifold 128 in communication with the cylinders, a compressor 112, a charge air cooler 116, and an air throttle actuator 126.

The compressor 112 may be a fixed geometry compressor, a variable geometry compressor, or any other type of compressor for receiving the fresh intake gas, from upstream of the compressor 112. The compressor 112 compress the fresh intake gas to an elevated pressure level. As shown, the charge air cooler 116 is positioned downstream of the compressor 112, and is configured to cool the fresh intake gas.

The air throttle actuator 126 may be positioned downstream of the charge air cooler 116, and it may be, for example, a flap type valve controlled by an electronic control unit (ECU) 115 to regulate the air-fuel ratio. The air throttle actuator 126 is open during normal operation and when the engine 106 is off. However, in order to raise the exhaust temperature prior to and during active exhaust filter regeneration, the ECU 115 progressively closes the air throttle actuator 126 (or, in some embodiments, an exhaust throttle valve). This creates a restriction and the exhaust temperature goes up. The ECU 115 receives position feedback from an internal sensor within the air throttle actuator 126.

Further, the power system 100 may include an exhaust system 140 having components for directing exhaust gas from the engine 106 to the atmosphere. Specifically, the exhaust system 140 may include an exhaust manifold (not shown) in fluid communication with the cylinders. During an exhaust stroke, at least one exhaust valve (not shown) opens, allowing the exhaust gas to flow through the exhaust manifold and a turbine 111. The pressure and volume of the exhaust gas drives the turbine 111, allowing it to drive the compressor 112 via a shaft (not shown). The combination of the compressor 112, the shaft, and the turbine 111 is known as a turbocharger 108.

In some embodiments, the power system 100 may also include a second turbocharger 109 that cooperates with the turbocharger 108 (e.g., parallel turbocharging or, as shown, series turbocharging). The second turbocharger 109 includes a second compressor 114, a second shaft (not shown), and a second turbine 113. The second compressor 114 may be a fixed geometry compressor, a variable geometry compressor, or any other type of compressor for receiving the fresh intake gas, from upstream of the second compressor 114, and compress the fresh intake gas to an elevated pressure level before it enters the engine 106.

The power system 100 may also include an EGR system 132 for receiving a recirculated portion of the exhaust gas, as indicated by directional arrow 194. The intake gas is indicated by directional arrow 190, and it is a combination of the fresh intake gas and the recirculated portion of the exhaust gas. The EGR system 132 has an EGR cooler 118 and an EGR valve 122. The EGR valve 122 may be a vacuum controlled valve or an electrically actuated valve, so as to allow a specific amount of the recirculated portion of the exhaust gas back into the intake manifold 128. The EGR cooler 118 cools the recirculated portion of the exhaust gas flowing therethrough. Although the EGR valve 122 is illustrated as being downstream of the EGR cooler 118, it could also be positioned upstream of the EGR cooler 118.

As further shown, the exhaust system 140 may include an aftertreatment system 120, and at least a portion of the exhaust gas passes therethrough. The aftertreatment system 120 removes various chemical compounds and particulate emissions present in the exhaust gas received from the engine 106. After being treated by the aftertreatment system 120, the exhaust gas is expelled into the atmosphere via a tailpipe 124.

The aftertreatment system 120 may include a NOx sensor 119 for producing and transmitting a NOx signal to the ECU 115 that is indicative of a NOx content of exhaust gas flowing thereby. The NOx sensor 119 may, for example, rely upon an electrochemical or catalytic reaction that generates a current, the magnitude of which is indicative of the NOx concentration of the exhaust gas.

The ECU 115 may have four primary functions: (1) converting analog sensor inputs to digital outputs, (2) performing mathematical computations for all fuel and other systems, (3) performing self diagnostics, and (4) storing information. The ECU 115 may, in response to the NOx signal, control a combustion temperature of the engine 106 and/or the amount of a reductant injected into the exhaust gas, so as to minimize the level of NOx entering the atmosphere.

In the illustrated embodiment, the aftertreatment system 120 includes a diesel oxidation catalyst (DOC) 163, a diesel particulate filter (DPF) 164, and a selective catalytic reduction (SCR) system 152. The SCR system 152 includes a reductant delivery system 135, an SCR catalyst 170, and an ammonia oxidation catalyst (AOC) 174. The exhaust gas may flow through the DOC 163, the DPF 164, the SCR catalyst 170, and the AOC 174, and is then, as just mentioned, expelled into the atmosphere via the tailpipe 124.

In other words, in the embodiment shown, the DPF 164 is positioned downstream of the DOC 163, the SCR catalyst 170 downstream of the DPF 164, and the AOC 174 downstream of the SCR catalyst 170. The DOC 163, the DPF 164, the SCR catalyst 170, and the AOC 174 may be coupled together. Exhaust gas treated, in the aftertreatment system 120, and released into the atmosphere contains significantly fewer pollutants-such as diesel particulate matter, NO2, and hydrocarbons-than an untreated exhaust gas.

The DOC 163 may contain catalyst materials useful in collecting, absorbing, adsorbing, and/or converting hydrocarbons, carbon monoxide, and/or oxides of nitrogen contained in the exhaust gas. Such catalyst materials may include, for example, aluminum, platinum, palladium, rhodium, barium, cerium, and/or alkali metals, alkaline-earth metals, rare-earth metals, or combinations thereof. The DOC 163 may include, for example, a ceramic substrate, a metallic mesh, foam, or any other porous material known in the art, and the catalyst materials may be located on, for example, a substrate of the DOC 163. The DOC(s) may also oxidize NO contained in the exhaust gas, thereby converting it to NO2. Or, stated slightly differently, the DOC 163 may assist in achieving a desired ratio of NO to NO2 upstream of the SCR catalyst 170.

The DPF 164 may be any of various particulate filters known in the art for reducing particulate matter concentrations, e.g., soot and ash, in the exhaust gas to meet requisite emission standards. Any structure capable of removing particulate matter from the exhaust gas of the engine 106 may be used. For example, the DPF 164 may include a wall-flow ceramic substrate having a honeycomb cross-section constructed of cordierite, silicon carbide, or other suitable material to remove the particulate matter. The DPF 164 may be electrically coupled to a controller, such as the ECU 115, that controls various characteristics of the DPF 164.

If the DPF 164 were used alone, it would initially help in meeting the emission requirements, but would quickly fill up with soot and need to be replaced. Therefore, the DPF 164 is combined with the DOC 163, which helps extend the life of the DPF 164 through the process of regeneration. The ECU 115 may measure the PM build up, also known as filter loading, in the DPF 164, using a combination of algorithms and sensors. When filter loading occurs, the ECU 115 manages the initiation and duration of the regeneration process.

Moreover, the reductant delivery system 135 may include a reductant tank 148 for storing the reductant. One example of a reductant is a solution having 32.5% high purity urea and 67.5% deionized water (e.g., DEF), which decomposes as it travels through a decomposition tube 160 to produce ammonia. Such a reductant may begin to freeze at approximately 12 deg F (-11deg C). If the reductant freezes when a machine is shut down, then the reductant may need to be thawed before the SCR system 152 can function.

The reductant delivery system 135 may include a reductant header 136 mounted to the reductant tank 148, the reductant header 136 further including, in some embodiments, a level sensor 150 for measuring a quantity of the reductant in the reductant tank 148. The level sensor 150 may include a float for floating at a liquid/air surface interface of reductant included within the reductant tank 148. Other implementations of the level sensor 150 are possible, and may include, for example, one or more of the following: (a) using one or more ultrasonic sensors; (b) using one or more optical liquid-surface measurement sensors; (c) using one or more pressure sensors disposed within the reductant tank 148; and (d) using one or more capacitance sensors.

In the illustrated embodiment, the reductant header 136 include a tank heating element 130 for receiving coolant from the engine 106, and the power system 100 may include a cooling system 133 that includes a coolant supply passage 180 and a coolant return passage 181. A first segment 196 of the coolant supply passage 180 is positioned fluidly between the engine 106 and the tank heating element 130, and supplies coolant to the tank heating element 130. The coolant circulates, through the tank heating element 130, so as to warm the reductant in the reductant tank 148, therefore reducing the risk that the reductant freezes therein. In an alternative embodiment, the tank heating element 130 may, instead, be an electrically resistive heating element.

A second segment 197 of the coolant supply passage 180 is positioned fluidly between the tank heating element 130 and a reductant delivery mechanism 158, and supplies coolant thereto. The coolant heats the reductant delivery mechanism 158, reducing the risk that reductant freezes therein.

A first segment 198 of the coolant return passage 181 is positioned between the reductant delivery mechanism 158 and the tank heating element 130, and a second segment 199 of the coolant return passage 181 is positioned between the engine 106 and the tank heating element 130. The first segment 198 and the second segment 199 return the coolant to the engine 106.

The decomposition tube 160 may be positioned downstream of the reductant delivery mechanism 158, but upstream of the SCR catalyst 170. The reductant delivery mechanism 158 may be, for example, an injector that is selectively controllable to inject reductant directly into the exhaust gas. As shown, the SCR system 152 may include a reductant mixer 166 that is positioned upstream of the SCR catalyst 170 and downstream of the reductant delivery mechanism 158.

The reductant delivery system 135 may additionally include a reductant pressure source (not shown) and a reductant extraction passage 184. The reductant extraction passage 184 may be coupled fluidly to the reductant tank 148 and the reductant pressure source therebetween. Although the reductant extraction passage 184 is shown extending into the reductant tank 148, in other embodiments, the reductant extraction passage 184 may be coupled to an extraction tube via the reductant header 136. The reductant delivery system 135 may further include a reductant supply module 168, and it may include the reductant pressure source.

The reductant supply module 168 may be, or be similar to, a Bosch reductant supply module, such as the one found in the "Bosch Denoxtronic 2.2 - Urea Dosing System for SCR Systems."

The reductant delivery system 135 may also include a reductant dosing passage 186 and a reductant return passage 188. The reductant return passage 188 is shown extending into the reductant tank 148, though in some embodiments of the power system 100, the reductant return passage 188 may be coupled to a return tube via the reductant header 136. And the reductant delivery system 135 may include-among other things-valves, orifices, sensors, and pumps positioned in the reductant extraction passage 184, reductant dosing passage 186, and reductant return passage 188.

As mentioned above, one example of a reductant is a solution having 32.5% high purity urea and 67.5% deionized water (e.g., DEF), which decomposes as it travels through the decomposition tube 160 to produce ammonia. The ammonia reacts with NOₓ in the presence of the SCR catalyst 170, and it reduces the NOₓ to less harmful emissions, such as N2 and H2O. The SCR catalyst 170 may be any of various catalysts known in the art. For example, in some embodiments, the SCR catalyst 170 may be a vanadium-based catalyst. But in other embodiments, the SCR catalyst 170 may be a zeolite-based catalyst, such as a Cu-zeolite or a Fezeolite.

The AOC 174 may be any of various flowthrough catalysts reacts with ammonia to produce mainly nitrogen. Generally, the AOC 174 is utilized to remove ammonia that has slipped through or exited the SCR catalyst 170. As shown, the AOC 174 and the SCR catalyst 170 may be positioned within the same housing. But in other embodiments, they may be separate from one another.

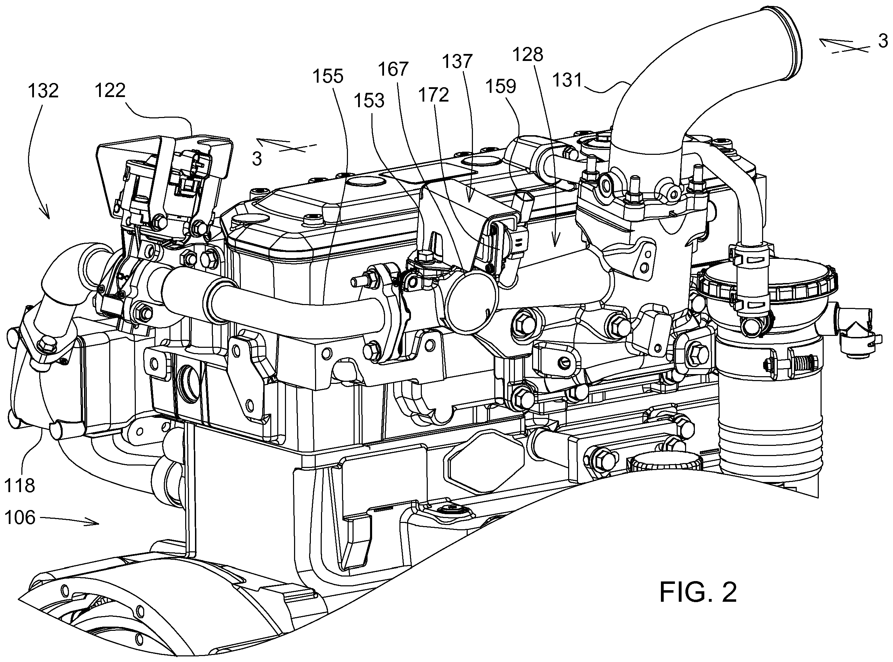

Referring to FIGS. 2-4, the intake manifold 128 includes a fresh intake gas opening 173, an EGR flow measurement system 137, and a mixing duct 139. The fresh intake gas opening 173 allows the fresh intake gas to flow therethrough. An intake gas duct 131 may be mounted to the intake manifold 128, or it may be formed integrally thereto. The EGR flow measurement system 137 defines a portion of an EGR duct 141 and measures a differential pressure of the recirculated exhaust gas flowing therethrough, which may be used for calculating, for example, the flow rate thereof. An additional EGR duct 155 may be positioned fluidly between the EGR valve 122 and the intake manifold 128.

The mixing duct 139 is positioned downstream of the fresh intake gas opening 173 relative to a direction of the fresh intake gas flow, and is also positioned downstream of the EGR duct 141 relative to a direction of the recirculated exhaust gas flow. The mixing duct 139, which is integrally formed into the EGR flow measurement system 137, mixes the fresh intake gas and the recirculated exhaust gas into a mixed intake gas. The recirculated exhaust gas travels in pulses correlating to the exhaust strokes of the cylinders (not shown) of the engine 106. So, if the engine 106 has, for example, four cylinders, then the recirculated exhaust gas travels in one pulse per every 180º of crank rotation. The fresh intake gas also travels in pulses, but these pulses correlate to, for example, the operation of the turbocharger 108 and the second turbocharger 109 and intake valves (not shown), resulting in the pulses of the fresh intake gas flow at unique times and frequencies relative to the pulses of the recirculated exhaust gas. As a result of all of this, the recirculated exhaust gas and fresh intake gas turbulently mix in the mixing duct 139.

To do this, the mixing duct 139 may include a mixing cylinder insert 129 having a plurality of mixing passages 138, the mixing passages 138 being positioned so as to create cross streams of the recirculated exhaust gas for mixing with the fresh intake gas. The combination of the mixing duct 139 and the mixing cylinder insert 129 may be referred to as an EGR mixer. The mixed intake gas is, ultimately, combusted in the engine 106. The integration of the mixing duct 139 and the EGR flow measurement system 137 results in a compact, reliable, sealed design.

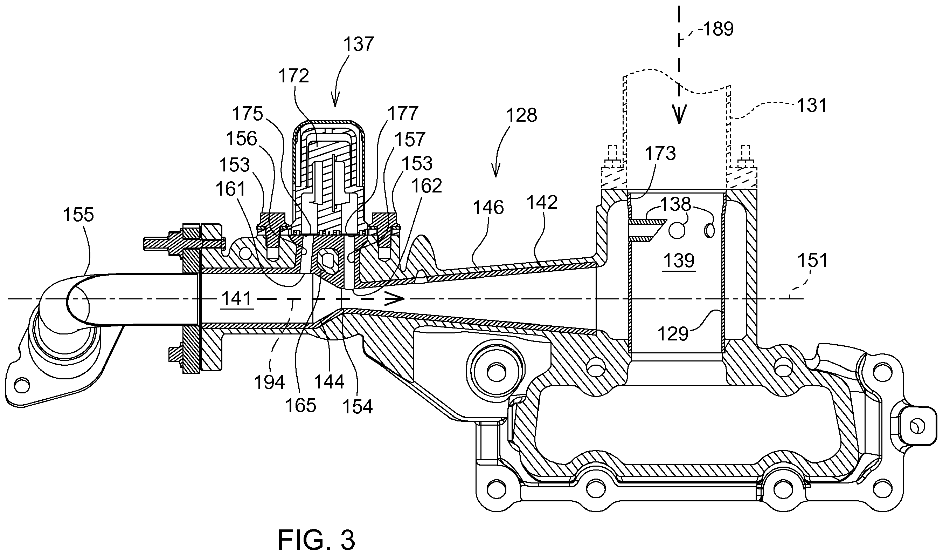

As illustrated in FIG. 3, the EGR flow measurement system 137 may have a converging section 144 and a diverging section 146 positioned downstream thereof, the converging section 144 and the diverging section 146 defining a connection 154. The EGR flow measurement system 137 further includes a high pressure passage 156 and a low pressure passage 157, both being, for example, drilled passages. A first end 161 of the high pressure passage 156 is connected to one of the converging section 144 and the connection 154, and a first end 162 of the low pressure passage 157 is connected to one of the connection 154 and the diverging section 146.

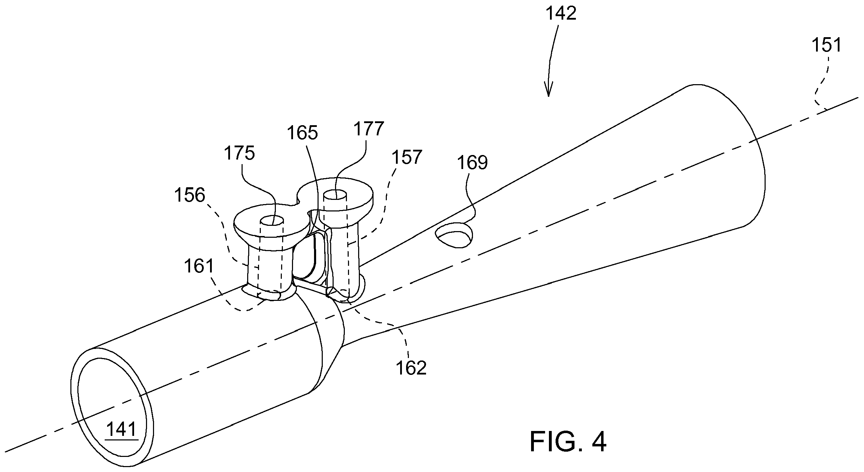

As shown in FIGS. 3 and 4, a venturi insert 142 may define the converging section 144 and the diverging section 146. The diverging section 146 defines an exit angle between, for example, 30° and 90° relative to a longitudinal axis 151 of the EGR flow measurement system 137. Further, as shown in the illustrated embodiment, it may define a portion of the high pressure passage 156 and a portion of the low pressure passage 157.

The venturi insert 142 may be formed of stainless steel or aluminum, for example, and may need to be carefully shaped and machined so as to ensure accurate differential pressure readings of the recirculated exhaust gas flow. The venturi insert 142 may be positioned via a lost foam casting process.

Further, the venturi insert 142 may define a coolant passage 165, the coolant passage 165 being positioned between the high pressure passage 156 and the low pressure passage 157. The coolant passage 165 stabilizes the temperature of the EGR flow measurement system 137, so as to prevent the formation of condensation. A cover 167 is welded to the intake manifold 128 so as to seal it.

In the power system 100, when the EGR valve 122 is open, exhaust gas flows through the EGR cooler 118, through the EGR valve 122, through the EGR flow measurement system 137, and through the intake manifold 128. And more particularly, as the recirculated exhaust gas flows through the EGR flow measurement system 137, it flows through the venturi insert 142. The EGR flow measurement system 137 measures the recirculated exhaust gas differential pressure on an accurate and dynamic basis, and it then forwards the measurement to the ECU 115.

As shown in FIG. 3, the EGR flow measurement system 137 may include a differential pressure sensor 172 that is positioned fluidly between a second end 175 of the high pressure passage 156, and a second end 177 of the low pressure passage 157. As shown, the differential pressure sensor 172 may be mounted to the venturi insert 142, but in other embodiments, it may be mounted to the intake manifold 128. A sensor cover 178 and the differential pressure sensor 172 may be mounted via a pair of fasteners 153.

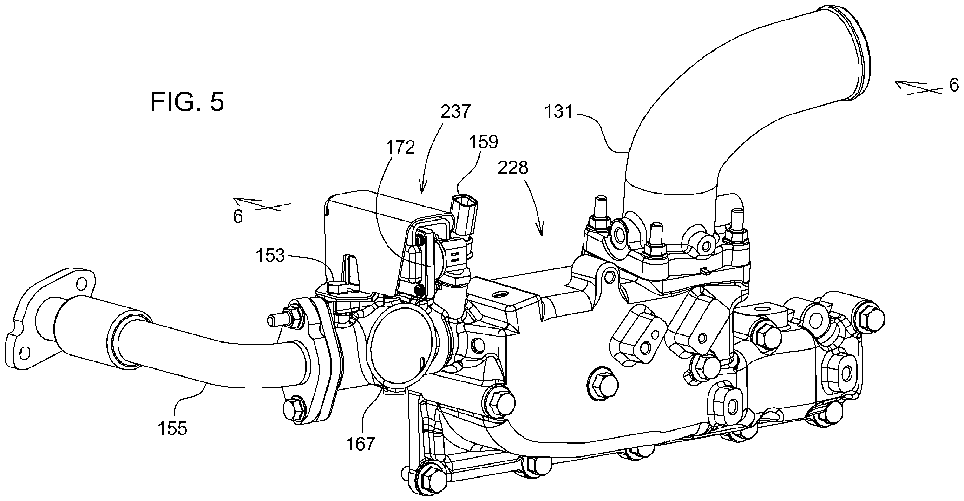

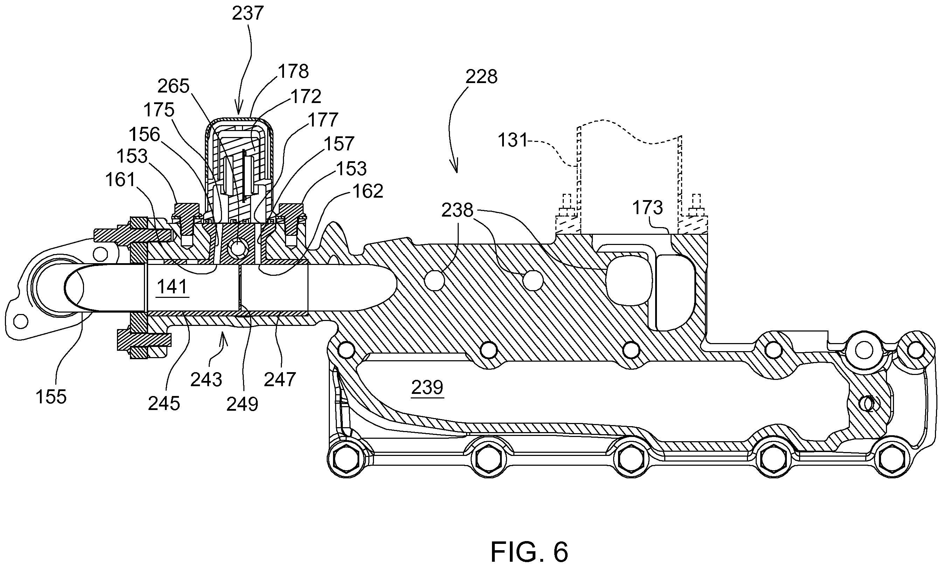

The differential pressure sensor 172 measures a differential pressure between a portion of the recirculated exhaust gas that is positioned at the connection 154 or upstream thereof, and a portion of the recirculated exhaust gas that is positioned at the connection 154 or downstream thereof. The differential pressure sensor 172 may be, for example, a P321 Kavlico Differential Pressure Sensor. The P321 Kavlico Differential Pressure Sensor may use a 5 Vdc input to measure the differential pressure, between the high pressure passage 156 and the low pressure passage 157, providing a 0.5 to 4.5 Vdc output proportional to pressure. Incorporating an oil-filled capacitive sense element, such a sensor may be able to withstand vacuum (negative) pressures as well as high common mode pressures. In addition to the differential pressure sensor 172, an EGR temperature sensor 159 may be positioned, in the intake manifold 128, for measuring the temperature of the recirculated exhaust gas. More particularly, the EGR temperature sensor 159 may be positioned in an EGR temperature sensor port 169 of the venturi insert 142. Referring to FIGS. 5-7, there is shown a second embodiment of an intake manifold 228 for mixing the fresh intake gas and the recirculated exhaust gas. The intake manifold 228 has several components similar in structure and function as the intake manifold 128, as indicated by the use of identical reference numerals where applicable. The intake manifold 228 includes a second embodiment of an EGR flow measurement system 237 and a second embodiment of a mixing duct 239. The intake manifold 228 may include a plurality of mixing passages 238, the mixing passages 238 being positioned so as to create cross streams of the recirculated exhaust gas that mix with the fresh intake gas.

The EGR flow measurement system 237 may include an orifice insert 243, a high pressure passage 156, and a low pressure passage 157. The orifice insert 243 includes a high pressure section 245, a low pressure section 247, and an orifice 249-the high pressure section 245 being positioned upstream of the low pressure section 247, and the orifice 249 being positioned therebetween. A first end 161 of the high pressure passage 156 is connected to the high pressure section 245, while a first end 162 of the low pressure passage 157 is connected to the low pressure section 247.

As shown in FIGS. 5-6, a cover 167 may be welded to the intake manifold 228. Further, the EGR flow measurement system 137 includes a differential pressure sensor 172 positioned fluidly between a second end 175 of the high pressure passage 156, and a second end 177 of the low pressure passage 157. The differential pressure sensor 172 is mounted to the orifice insert 243.

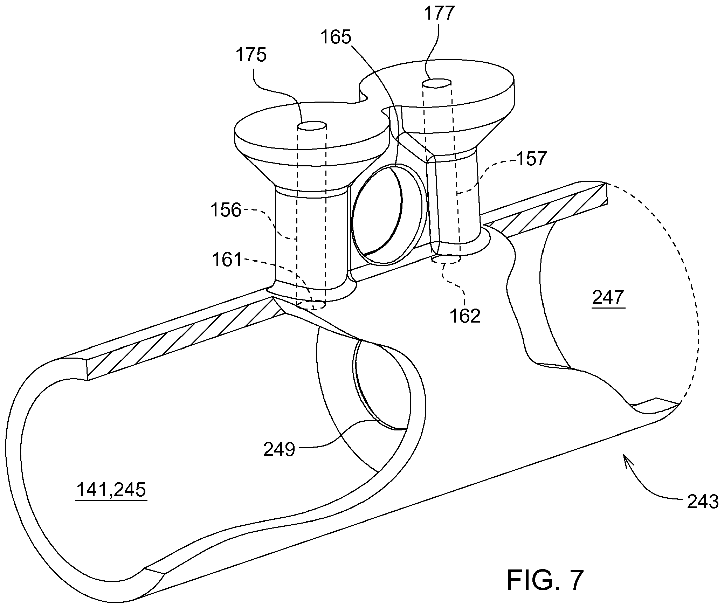

Finally, as shown in FIG. 7, the orifice insert 243 may define a portion of the high pressure passage 156 and a portion of the low pressure passage 157. In the embodiment shown, the orifice 249 is a diverging orifice that increases in diameter in a downstream direction. The orifice insert 243, which may be positioned via a lost foam casting process, may be formed out of stainless steel or aluminum and may need to be carefully shaped and machined so as to ensure accurate pressure readings of the recirculated exhaust gas. The orifice insert 243 may define a portion of a coolant passage 265, the coolant passage 265 being positioned between the high pressure passage 156 and the low pressure passage 157. The coolant passage 265 stabilizes the temperature of the EGR flow measurement system 237, thereby preventing the formation of condensation.

## Claims

1. An intake manifold (128), comprising:
an intake gas duct (131) configured to allow a fresh intake gas to flow therethrough;
an exhaust gas recirculation (EGR) duct;
an EGR flow measurement system (137), being integrally formed into the intake manifold, defining a portion of the EGR duct (141) and configured to measure a differential pressure of a recirculated exhaust gas passing therethrough; and
a mixing duct (139) being positioned downstream of the intake gas duct (131) relative to a direction of the fresh intake gas flow and also being positioned downstream of the EGR duct (141) relative to a direction of the recirculated exhaust gas flow, the mixing duct (139) being configured to mix the fresh intake gas and the recirculated exhaust gas into a mixed intake gas, the mixing duct (139) being integrally formed into the intake manifold (128),
wherein the EGR flow measurement system (137) comprises:
a converging section (144) and a diverging section (146) positioned downstream thereof, the converging section (144) and the diverging section (146) defining a connection (154);
a high pressure passage (156), a first end of the high pressure passage (156) being connected to one of the converging section and the connection (154); and a low pressure passage (157), a first end of the low pressure passage (157) being connected to one of the connection (154) and the diverging section (146), wherein the EGR flow measurement system (137) comprises a venturi insert (142) forming the converging section (144) and the diverging section (146).

2. The intake manifold (128) according to claim 1, wherein the EGR flow measurement system (137) further comprises a differential pressure sensor (172), the differential pressure sensor (172) is positioned fluidly between a second end of the high pressure passage (156) and a second end of the low pressure passage (157), and the differential pressure sensor (172) is configured to indicate a differential pressure between a portion of the recirculated exhaust gas that is positioned at the connection (154) or upstream of the connection (154) and a portion of the recirculated exhaust gas that is positioned at the connection (154) or downstream of the connection (154).

3. The intake manifold (128) according to claim 2, wherein the differential pressure sensor (172) is mounted to the venturi insert (142).

4. The intake manifold (128) according to claim 3, wherein the venturi insert (142) defines a portion of the high pressure passage (156) and a portion of the low pressure passage (157).

5. The intake manifold (128) according to claim 3 or 4, wherein the venturi insert (142) is formed out of stainless steel.

6. An intake manifold (228), comprising:
an intake gas duct (131) configured to allow a fresh intake gas to flow therethrough;
an exhaust gas recirculation (EGR) duct;
an EGR flow measurement system (237), being integrally formed into the intake manifold,
defining a portion of the EGR duct (141) and configured to measure a differential pressure of a recirculated exhaust gas passing therethrough; and
a mixing duct (239) being positioned downstream of the intake gas duct (131) relative to a direction of the fresh intake gas flow and also being positioned downstream of the EGR duct (141) relative to a direction of the recirculated exhaust gas flow, the mixing duct (139) being configured to mix the fresh intake gas and the recirculated exhaust gas into a mixed intake gas, the mixing duct (139) being integrally formed into the intake manifold (128),
wherein the EGR flow measurement system comprises:
an orifice insert (234), the orifice insert (234) comprising a high pressure section (245), a low pressure section (247), and an orifice (249), the high pressure section (245) being positioned upstream of the low pressure section (247), and the orifice (249) being positioned therebetween;
a high pressure passage (156), a first end of the high pressure passage (156) being connected to the high pressure section (245); and
a low pressure passage (157), a first end of the low pressure passage (157) being connected to the low pressure section (247).

7. The intake manifold (228) according to claim 6, wherein the orifice insert (234) defines a portion of the high pressure passage (156) and a portion of the low pressure passage (157).

8. The intake manifold (228) according to claim 6 or 7, wherein the orifice (249) is a diverging orifice that increases in diameter in a downstream direction.

9. The intake manifold (228) according to one of the claims 6 to 8, wherein the orifice insert (234) is formed out of stainless steel.

10. The intake manifold (228) according to one of the claims 6 to 9, wherein the orifice insert (234) defines a coolant passage (265), and the coolant passage (265) is positioned between the high pressure passage (156) and the low pressure passage (157).

11. The intake manifold (228) according to one of the claims 6 to 10, wherein the EGR flow measurement system (237) comprises a differential pressure sensor (172), the differential pressure sensor (172) is positioned fluidly between a second end of the high pressure passage (156) and a second end of the low pressure passage (157), and the differential pressure sensor (172) is configured to indicate a differential pressure between a portion of the recirculated exhaust gas that is positioned upstream of the orifice (249) and a portion of the recirculated exhaust gas that is positioned downstream of the orifice (249).

12. The intake manifold (228) according to claim 11, wherein the differential pressure sensor (172) is mounted to the orifice insert (234).

## Patentansprüche

1. Ein Ansaugkrümmer (128), aufweisend:
einen Einlassgaskanal (131), welcher dafür ausgelegt ist, es einem frischen Einlassgas zu ermöglichen, dort hindurch zu strömen;
einen Kanal zur Abgasrückführung (EGR);
ein EGR-Durchflussmesssystem (137), welches integral in dem Abgaskrümmer ausgebildet ist, welches einen Abschnitt des EGR-Kanals (141) bildet und dafür ausgelegt ist, einen Differenzdruck eines dort hindurch strömenden rückgeführten Abgases zu messen; und
einen Mischkanal (139), welcher stromabwärts des Einlasskanals (131) in Bezug auf eine Richtung des frischen Einlassgasstroms positioniert ist und auch stromabwärts des EGR-Kanals (141) in Bezug auf eine Richtung des rückgeführten Abgasstroms positioniert ist, wobei der Mischkanal (139) dafür ausgelegt ist, das frische Einlassgas und das rückgeführte Abgas in ein gemischtes Einlassgas zu mischen, wobei der Mischkanal (139) integral in dem Ansaugkrümmer (128) ausgebildet ist,
wobei das EGR-Durchflussmesssystem (137) aufweist:
einen konvergierenden Abschnitt (144) und einen davon stromabwärts positionierten divergierenden Abschnitt (146), wobei der konvergierende Abschnitt (144) und der divergierende Abschnitt (146) eine Verbindung (154) definieren;
einen Hochdruckkanal (156), wobei ein erstes Ende des Hochdruckkanals (156) mit einem von dem konvergierenden Abschnitt und der Verbindung (154) verbunden ist;
und einen Niederdruckkanal (157), wobei ein erstes Ende des Niederdruckkanals (157) mit einem von der Verbindung (154) und dem divergierenden Abschnitt (146) verbunden ist, wobei das EGR-Durchflussmesssystem (137) einen Venturi-Einsatz (142) aufweist, welcher den konvergierenden Abschnitt (144) und den divergierenden Abschnitt (146) bildet.

2. Der Ansaugkrümmer (128) gemäß Anspruch 1, wobei das EGR-Durchflussmesssystem (137) weiter einen Differenzdrucksensor (172) aufweist, der Differenzdrucksensor (172) fluidisch zwischen einem zweiten Ende des Hochdruckkanals (156) und einem zweiten Ende des Niederdruckkanals (157) positioniert ist, und der Differenzdrucksensor (172) dafür ausgelegt ist, einen Differenzdruck zwischen einem Teil des rückgeführten Abgases, welcher an der Verbindung (154) oder stromaufwärts von der Verbindung (154) positioniert ist, und einem Teil des rückgeführten Abgases, welcher an der Verbindung (154) oder stromabwärts von der Verbindung (154) positioniert ist, anzugeben.

3. Der Ansaugkrümmer (128) gemäß Anspruch 2, wobei der Differenzdrucksensor (172) an dem Venturi-Einsatz (142) montiert ist.

4. Der Ansaugkrümmer (128) gemäß Anspruch 3, wobei der Venturi-Einsatz (142) einen Abschnitt des Hochdruckkanals (156) und einen Abschnitt des Niederdruckkanals (157) definiert.

5. Der Ansaugkrümmer (128) gemäß Anspruch 3 oder 4, wobei der Venturi-Einsatz (142) aus Edelstahl gebildet ist.

6. Ein Ansaugkrümmer (228), aufweisend:
einen Einlassgaskanal (131), welcher dafür ausgelegt ist, es einem frischen Einlassgas zu ermöglichen, dort hindurch zu strömen;
einen Kanal zur Abgasrückführung (EGR);
ein EGR-Durchflussmesssystem (237), welches integral in dem Abgaskrümmer ausgebildet,
welches einen Abschnitt des EGR-Kanals (141) bildet und dafür ausgelegt ist, einen Differenzdruck eines dort hindurch strömenden rückgeführten Abgases zu messen; und
einen Mischkanal (239), welcher stromabwärts des Einlasskanals (131) in Bezug auf eine Richtung des frischen Einlassgasstroms positioniert ist und auch stromabwärts des EGR-Kanals (141) in Bezug auf eine Richtung des rückgeführten Abgasstroms positioniert ist, wobei der Mischkanal (139) dafür ausgelegt ist, das frische Einlassgas und das rückgeführte Abgas in ein gemischtes Einlassgas zu mischen, wobei der Mischkanal (139) integral in dem Ansaugkrümmer (128) ausgebildet ist,
wobei das EGR-Durchflussmesssystem aufweist:
einen Öffnungseinsatz (234), wobei der Öffnungseinsatz (234) einen Hochdruckabschnitt (245) aufweist,
einen Niederdruckabschnitt (247) und eine Öffnung (249), wobei der Hochdruckabschnitt (245) stromaufwärts von dem Niederdruckabschnitt (247) positioniert ist und die Öffnung (249) dazwischen positioniert ist;
einen Hochdruckkanal (156), wobei ein erstes Ende des Hochdruckkanals (156) mit dem Hochdruckabschnitt (245) verbunden ist; und
einen Niederdruckkanal (157), wobei ein erstes Ende des Niederdruckkanals (157) mit dem Niederdruckabschnitt (247) verbunden ist.

7. Der Ansaugkrümmer (228) gemäß Anspruch 6, wobei der Öffnungseinsatz (234) einen Abschnitt des Hochdruckkanals (156) und einen Abschnitt des Niederdruckkanals (157) definiert.

8. Der Ansaugkrümmer (228) gemäß Anspruch 6 oder 7, wobei die Öffnung (249) eine divergierende Öffnung ist, deren Durchmesser in einer Richtung stromabwärts größer wird.

9. Der Ansaugkrümmer (228) gemäß einem der Ansprüche 6 bis 8, wobei der Öffnungseinsatz (234) aus Edelstahl ausgebildet ist.

10. Der Ansaugkrümmer (228) gemäß einem der Ansprüche 6 bis 9, wobei der Öffnungseinsatz (234) einen Kühlkanal (265) definiert und der Kühlkanal (265) zwischen dem Hochdruckkanal (156) und dem Niederdruckkanal (157) positioniert ist.

11. Der Ansaugkrümmer (228) gemäß einem der Ansprüche 6 bis 10, wobei das EGR-Durchflussmesssystem (237) einen Differenzdrucksensor (172) aufweist, der Differenzdrucksensor (172) fluidisch zwischen einem zweiten Ende des Hochdruckkanals (156) und einem zweiten Ende des Niederdruckkanals (157) positioniert ist, und der Differenzdrucksensor (172) dafür ausgelegt ist, einen Differenzdruck zwischen einem Teil des rückgeführten Abgases, welcher stromaufwärts von der Öffnung (249) positioniert ist, und einem Teil des rückgeführten Abgases, welcher stromabwärts von der Öffnung (249) positioniert ist, anzugeben.

12. Der Ansaugkrümmer (228) gemäß Anspruch 11, wobei der Differenzdrucksensor (172) an dem Öffnungseinsatz (234) montiert ist.

## Revendications

1. Collecteur d'admission (128), comprenant:
un conduit de gaz d'admission (131) configuré de manière à permettre à un gaz d'admission frais de s'écouler à travers celui-ci;
un conduit de recirculation de gaz d'échappement (EGR) ;
un système de mesure de débit EGR (137), qui est intégralement formé dans le collecteur d'admission, définissant une partie du conduit EGR (141) et configuré de manière à mesurer une pression différentielle d'un gaz d'échappement recirculant qui passe à travers celui-ci; et
un conduit de mélange (139) qui est positionné en aval du conduit de gaz d'admission (131) par rapport à une direction de l'écoulement de gaz d'admission frais, et qui est également positionné en aval du conduit EGR (141) par rapport à une direction de l'écoulement de gaz d'échappement recirculant, le conduit de mélange (139) étant configuré de manière à mélanger le gaz d'admission frais et le gaz d'échappement recirculant pour obtenir un gaz d'admission mélangé, le conduit de mélange (139) étant intégralement formé dans le collecteur d'admission (128),
dans lequel le système de mesure de débit EGR (137) comprend:
une section convergeante (144) et une section divergeante (146) positionnée en aval de celle-ci, la section convergeante (144) et la section divergeante (146) définissant une connexion (154);
un passage à haute pression (156), une première extrémité du passage à haute pression (156) étant connectée à l'une parmi la section convergeante et la connexion (154); et
un passage à basse pression (157), une première extrémité du passage à basse pression (157) étant connectée à l'une parmi la connexion (154) et la section divergeante (146),
dans lequel le système de mesure de débit EGR (137) comprend un insert de venturi (142) qui forme la section convergeante (144) et la section divergeante (146) .

2. Collecteur d'admission (128) selon la revendication 1, dans lequel le système de mesure de débit EGR (137) comprend un capteur de pression différentielle (172), le capteur de pression différentielle (172) étant positionné fluidiquement entre une seconde extrémité du passage à haute pression (156) et une seconde extrémité du passage à basse pression (157), et le capteur de pression différentielle (172) étant configuré de manière à indiquer une pression différentielle entre une partie du gaz d'échappement recirculant qui est positionnée au niveau de la connexion (154) ou en amont de la connexion (154) et une partie du gaz d'échappement recirculant qui est positionnée au niveau de la connexion (154) ou en aval de la connexion (154).

3. Collecteur d'admission (128) selon la revendication 2, dans lequel le capteur de pression différentielle (172) est monté sur l'insert de venturi (142) .

4. Collecteur d'admission (128) selon la revendication 3, dans lequel l'insert de venturi (142) définit une partie du passage à haute pression (156) et une partie du passage à basse pression (157).

5. Collecteur d'admission (128) selon la revendication 3 ou 4, dans lequel l'insert de venturi (142) est constitué d'acier inoxydable.

6. Collecteur d'admission (228), comprenant:
un conduit de gaz d'admission (131) configuré de manière à permettre à un gaz d'admission frais de s'écouler à travers celui-ci;
un conduit de recirculation de gaz d'échappement (EGR) ;
un système de mesure de débit EGR (237), qui est intégralement formé dans le collecteur d'admission, définissant une partie du conduit EGR (141) et configuré de manière à mesurer une pression différentielle d'un gaz d'échappement recirculant qui passe à travers celui-ci; et
un conduit de mélange (239) qui est positionné en aval du conduit de gaz d'admission (131) par rapport à une direction de l'écoulement de gaz d'admission frais et qui est également positionné en aval du conduit EGR (141) par rapport à une direction de l'écoulement de gaz d'échappement recirculant, le conduit de mélange (139) étant configuré de manière à mélanger le gaz d'admission frais et le gaz d'échappement recirculant pour obtenir un gaz d'admission mélangé, le conduit de mélange (139) étant intégralement formé dans le collecteur d'admission (128),
dans lequel le système de mesure de débit EGR comprend:
un insert d'orifice (234), l'insert d'orifice (234) comprenant une section de haute pression (245), une section de basse pression (247) et un orifice (249), la section de haute pression (245) étant positionnée en amont de la section de basse pression (247), et l'orifice (249) étant positionné entre celles-ci;
un passage à haute pression (156), une première extrémité du passage à haute pression (156) étant connectée à la section de haute pression (245); et
un passage à basse pression (157), une première extrémité du passage à basse pression (157) étant connectée à la section de basse pression (247).

7. Collecteur d'admission (228) selon la revendication 6, dans lequel l'insert d'orifice (234) définit une partie du passage à haute pression (156) et une partie du passage à basse pression (157).

8. Collecteur d'admission (228) selon la revendication 6 ou 7, dans lequel l'orifice (249) est un orifice divergeant dont le diamètre augmente dans une direction vers l'aval.

9. Collecteur d'admission (228) selon l'une des revendications 6 à 8, dans lequel l'insert d'orifice (234) est constitué d'acier inoxydable.

10. Collecteur d'admission (228) selon l'une des revendications 6 à 9, dans lequel l'insert d'orifice (234) définit un passage de fluide de refroidissement (265), et le passage de fluide de refroidissement (265) est positionné entre le passage à haute pression (156) et le passage à basse pression (157).

11. Collecteur d'admission (228) selon l'une des revendications 6 à 10, dans lequel le système de mesure de débit EGR (237) comprend un capteur de pression différentielle (172), le capteur de pression différentielle (172) étant positionné fluidiquement entre une seconde extrémité du passage à haute pression (156) et une seconde extrémité du passage à basse pression (157), et le capteur de pression différentielle (172) étant configuré de manière à indiquer une pression différentielle entre une partie du gaz d'échappement recirculant qui est positionnée en amont de l'orifice (249) et une partie du gaz d'échappement recirculant qui est positionnée en aval de l'orifice (249).

12. Collecteur d'admission (228) selon la revendication 11, dans lequel le capteur de pression différentielle (172) est monté sur l'insert d'orifice (234).
